# EUROPEAN PATENT APPLICATION

(11) **EP 4 395 057 A1**
(43) Date of publication of application: **03.07.2024**
(21) Application number: 22909263.0
(22) Date of filing: 25.07.2022
(51) Int. Cl.: H01M 50/593

(54) **POWER BATTERY**

(30) Priority: 20.12.2021 CN 202123215485 U
(71) Applicant: Eve Power Co., Ltd., Jingmen Hubei 448000 (CN)
(72) Inventor: LI, Xing, Jingmen, Hubei 448000 (CN)
(74) Representative: Murgitroyd & Company
(86) International application number: PCT/CN2022/107565
(87) International publication number: WO 2023/115933

(57) **Abstract**

The application discloses a power battery. The power battery includes a winding core, a housing and an inner protective film. The winding core is disposed in the housing. A bottom of the housing is provided with a bottom support piece, and the bottom support piece is provided with a first positioning hole. The inner protective film is sleeved outside the winding core and located in the housing. A bottom of the inner protective film is connected to the bottom support piece. The bottom of the inner protective film is provided with a second positioning hole, and the second positioning hole and the first positioning hole are disposed in a staggered manner.

## Description

The application claims priority to Chinese Patent Application No. 202123215485.0, filed on December 20, 2021, which is incorporated herein by reference in its entirety.

### TECHNICAL FIELD

The application relates to the field of battery technologies, for example, relates to a power battery.

### BACKGROUND

An inner protective film is disposed inside a battery cell, to prevent an internal electrode plate from being in direct contact with an aluminum housing when a diaphragm of a winding core is pierced or damaged, causing a short circuit of the battery cell and causing thermal runaway, fire, and explosion of the battery cell. With the wide application of batteries in various fields, safety performance of the battery cell is particularly important. In the existing art, in an assembly process of the battery cell, positioning holes of the inner protective film and a bottom support piece are generally overlapped to facilitate positioning. However, when the battery cell is in abuse or in a micro-short circuit or a short circuit state under special circumstances, a negative electrode plate is conductive to the aluminum housing (normally the negative electrode plate is insulated from the aluminum housing). When the battery cell is charged, under an external voltage, some lithium ions in positive electrode material and an electrolyte solution will choose to flow to the negative electrode plate through pores where a bent line and the positioning hole of the inner protective film overlap, and some lithium ions will choose to flow to the aluminum housing. In the case of the short circuit, a potential of the aluminum housing and a potential of the negative electrode are substantially the same. The lithium ions flowing towards the aluminum housing receive electrons on an inner surface of the aluminum housing, which react to form a lithium-aluminum alloy, causing corrosion of the aluminum housing. In the case of the short circuit, the lithium ions flowing to the negative electrode are prone to form lithium elements on a surface of the negative electrode. The lithium elements settle under gravity, are in direct contact with a bottom of the aluminum housing through the pores and the positioning hole of the inner protective film at the bottom. In this way, corrosion and penetration of the aluminum housing will be accelerated, causing leakage of the electrolyte solution. In addition, in the case of the short circuit, it is prone to cause the battery cell to catch fire, posing a safety hazard to life and property.

### SUMMARY

The application provides a power battery, which can avoid fire caused by electrolyte solution leakage in a case of a short circuit of a battery cell, with high safety and production yield.

The application adopts the following technical solutions.

A power battery is provided, including:
a winding core;
a housing, where the winding core is disposed in the housing. A bottom of the housing is provided with a bottom support piece, and the bottom support piece is provided with a first positioning hole.

An inner protective film sleeved outside the winding core and located in the housing, where a bottom of the inner protective film is connected to the bottom support piece, the bottom of the inner protective film is provided with a second positioning hole, and the second positioning hole and the first positioning hole are disposed in a staggered manner.

### BRIEF DESCRIPTION OF DRAWINGS

The following briefly introduces the drawings required for describing some embodiments of the application. The drawings in the following description are only some embodiments of the application, and those skilled in the art may still derive other drawings according to some embodiments of the application and from these drawings without creative efforts.
FIG. 1 is an exploded view of a power battery according to some embodiments of the application.
FIG. 2 is a first schematic expanded view of an inner protective film according to some embodiments of the application (a notch is provided on a second portion).
FIG. 3 is a second schematic expanded view of an inner protective film according to some embodiments of the application (a notch is provided on a first portion).
FIG. 4 is a schematic diagram of a structure of a bent section and a straight section of an inner protective film according to some embodiments of the application.
FIG. 5 is a schematic diagram of an internal structure of a power battery according to some embodiments of the application.
FIG. 6 is a schematic diagram of a structure of an inner protective film according to some embodiments of the application.
FIG. 7 is an enlarged view of a part A in FIG. 6.

In the drawings:
100. First positioning hole; 200. Second positioning hole; 300. Notch;
1. Winding core; 2. Housing; 3. Bottom support piece; 4. Inner protective film; 41. Bent section; 42. Straight section; 401. First portion; 402. Second portion; 403. Overlapping region; 410. First body portion; 411. First side portion; 412. Second body portion; 422. Second side portion;
5. Top cover assembly; 51. Lower plastic structure; 6. Adhesive tape; 7. Binding glue; 8. Outer protective film; 9. Top insulation sheet; 10. Bottom insulation sheet.

### DETAILED DESCRIPTION

The following describes the application in detail with reference to the drawings and embodiments. It may be understood that embodiments described herein are merely used to explain the application. In addition, it should be further noted that, for ease of description, the drawings only show parts relevant to the application rather than the entire structure.

In the description of the application, unless otherwise explicitly specified and defined, terms such as "connected", "connection", and "fixed" should be understood in a broad sense. For example, the connection may be a fixed connection, a detachable connection, or an integral connection; or the connection may be a mechanical connection or an electrical connection; or the connection may be a direct connection, an indirect connection through an intermediate, or internal communication between two elements or an interaction relationship between two elements. A person of ordinary skill in the art may understand the meanings of the foregoing terms in the application according to situations.

In the application, unless otherwise explicitly specified and defined, a first feature is "on" or "below" a second feature may indicate that the first feature and the second feature are in direct contact, or the first feature and the second feature are in contact through additional features between them rather than in direct contact. In addition, that the first feature is "above", "over", or "on" the second feature may indicate that the first feature is directly above and obliquely above the second feature, or may merely indicate that the horizontal position of the first feature is higher than that of the second feature. That the first feature is "below", "under", or "beneath" the second may indicate that the first feature is directly below and obliquely below the second feature, or may merely indicate that the horizontal height of the first feature is lower than that of the second feature.

In the description of the embodiments, orientation or position relationships indicated by terms such as "upper", "lower", "left", and "right" are based on orientation or position relationships shown in the drawings, and are used only for ease of description and simplifying operations, rather than indicating or implying that the mentioned apparatus or element needs to have a particular orientation or needs to be constructed and operated in a particular orientation. In the description of the application, unless otherwise specified, "a plurality of" means two or more. In addition, the terms "first" and "second" are only used to distinguish between descriptions and have no specific meaning.

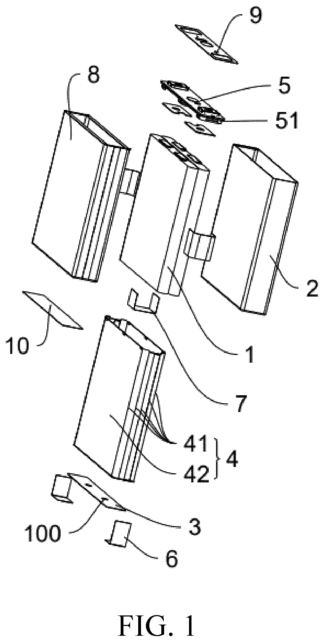

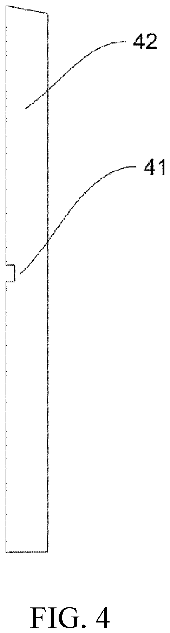

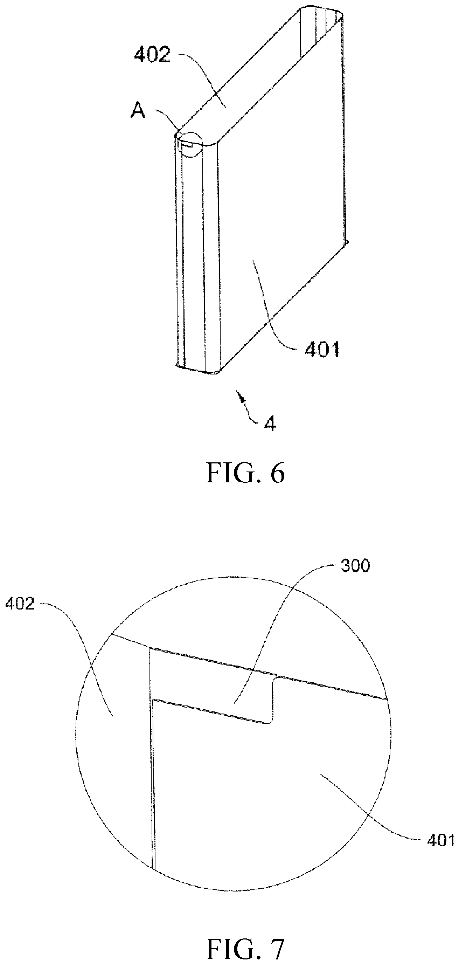

As shown in FIG. 1 to FIG. 7, some embodiments provide a power battery. The power battery includes a winding core 1, a housing 2, and an inner protective film 4. The winding core 1 is disposed in the housing 2. A bottom of the housing 2 is provided with a bottom support piece 3, and the bottom support piece 3 is provided with a first positioning hole 100. The inner protective film 4 is sleeved outside the winding core 1 and located in the housing 2. A bottom of the inner protective film 4 is connected to the bottom support piece 3. The bottom of the inner protective film 4 is provided with a second positioning hole 200, and the second positioning hole 200 and the first positioning hole 100 are disposed in a staggered manner. Optionally, the housing 2 is an aluminum housing. The inner protective film 4 is sleeved outside the winding core 1, to isolate and protect the winding core 1, and prevent an internal electrode plate from being in direct contact with the housing 2 when a diaphragm inside the winding core 1 is pierced or damaged, causing a short circuit of a battery cell and causing thermal runaway, fire, and explosion of the battery cell. In addition, positioning the bottom support piece 3 and the inner protective film 4 is achieved by aligning the first positioning hole 100 and the second positioning hole 200 respectively with a positioning component, such as a positioning column on a feeding mechanism, thereby preventing quality of the battery cell from being affected by displacement of the bottom support piece 3 and the inner protective film 4. The first positioning hole 100 and the second positioning hole 200 are disposed in the staggered manner, that is, the first positioning hole 100 and the second positioning hole 200 are not overlapping and are disconnected at all. In this way, the elemental lithium is prevented from being in direct contact with a bottom of the aluminum housing through the first positioning hole 100 and the second positioning hole 200 when the battery cell has a micro-short circuit or a short circuit, causing the housing 2 to be corroded and penetrated, an electrolyte solution to be exposed, or even the battery cell to catch fire, or the like. Therefore, safety of the power battery is improved, a yield of the power battery is increased, and potential safety hazards are reduced.

Optionally, as shown in FIG. 1, the bottom of the inner protective film 4 is connected to the bottom support piece 3 through hot melting. That is, a hot-melt adhesive is disposed between the bottom of the inner protective film 4 and the bottom support piece 3, and the inner protective film 4 is connected to the bottom support piece 3 by heating the hot-melt adhesive. Therefore, the operation is convenient and the connection is firm. Optionally, in order to enhance the connection stability at an edge between the bottom support piece 3 and an edge of the inner protective film 4 as well as to avoid gaps at the edge, the bottom support piece 3 and the inner protective film 4 are further connected by an adhesive tape 6. The adhesive tape 6 is connected to a lower end face of the bottom support piece 3 and an outer side face of the inner protective film 4. The adhesive tape 6 covers a part of the edge between the bottom support piece 3 and the edge of the inner protective film 4, avoiding gaps caused by incomplete coverage of the hot-melt adhesive on a connected face between the bottom support piece 3 and the inner protective film 4. This facilitates subsequent placement of the bottom support piece and the inner protective film into the housing 2 and improves the yield of the power battery. Optionally, two adhesive tapes 6 are disposed, and the two adhesive tapes 6 are respectively disposed at two ends of the bottom support piece 3 and bonded to two opposite side walls of the inner protective film 4 respectively. That is, the two adhesive tapes 6 are respectively used to tightly adhere the two ends of the bottom support piece 3 to the inner protective film 4. In this way, the two small-area side faces of the inner protective film 4 can be supported and protected, improving the connection stability between the bottom support piece 3 and the inner protective film 4. In addition, the placement of the winding core 1 into the housing is also facilitated.

In some embodiments, the two adhesive tapes 6 are respectively disposed at two ends of the bottom support piece 3. The adhesive tapes 6 are each respectively bonded to the two opposite side walls of the inner protective film 4 that are defined by connecting two first side portions 411 and two second side portions 422.

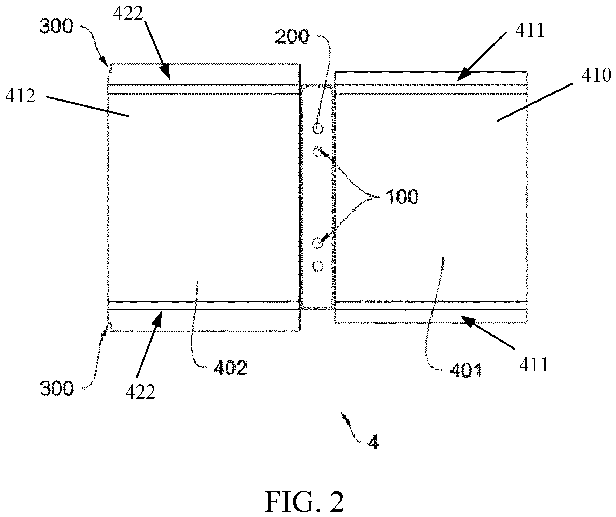

In some embodiments, as shown in FIG. 2, a plurality of first positioning holes 100 and a plurality of second positioning holes 200 are provided, and the plurality of first positioning holes 100 and the plurality of second positioning holes 200 are all disposed in a staggered manner. By providing the plurality of first positioning holes 100 and the plurality of second positioning holes 200, it is convenient to position the bottom support piece 3 and the inner protective film 4, accurately mount the bottom support piece 3 and the inner protective film 4, and prevent the yield of the power battery from being affected by askew positioning. Optionally, the bottom support piece 3 is provided with two first positioning holes 100, and the inner protective film 4 is provided with two second positioning holes 200. The bottom support piece 3 can be precisely positioned through the two first positioning holes 100, without a drilling process, thereby improving the integrity and structural strength of the bottom support piece 3. Similarly, the bottom support piece 3 can be precisely positioned through the two second positioning holes 200, without a drilling process, thereby improving the integrity and structural strength of the inner protective film 4.

Optionally, as shown in FIG. 1, the power battery further includes a top cover assembly 5. The top cover assembly 5 is disposed on an upper end opening of the housing 2. A lower plastic structure 51 is disposed on the top cover assembly 5. An upper end of the inner protective film 4 is in a shape of an opening, and an opening edge of the upper end of the inner protective film 4 is connected to the lower plastic structure 51 through hot melting. Through the hot-melt connection with the lower plastic structure 51, the inner protective film 4 covers the winding core 1 and is then fixed with the top cover assembly 5, and the inner protective film 4 completely covers the winding core 1 in a closed space. Optionally, connected parts between the inner protective film 4 and the lower plastic structure 51 are each a single-layer structure, which improves uniformity of the hot-melt connection and prevents the inner protective film 4 located on an outer layer from warping when the connected parts are a double-layer structure. Therefore, placement of the winding core 1 into the housing is facilitated.

In some embodiments, the inner protective film 4 is attached to an outer surface of the winding core 1, to improve the protection effect and to facilitate placing the winding core 1 covered with the inner protective film 4 into the housing 2. Optionally, the inner protective film 4 includes a plurality of bent sections 41 and a plurality of straight sections 42. Two adjacent straight sections 42 are connected by a bent section 41, and a thickness of the bent section 41 is less than a thickness of the straight section 42. Optionally, as shown in FIG. 1, FIG. 3, and FIG. 4, the inner protective film 4 is attached to the winding core 1, that is, a bent section 41 is defined at a bent position of the winding core 1. The thickness of the bent section 41 is set to be less than the thickness of the straight section 42, making a transition of the bent section 41 smooth. In this way, a problem such as an uneven surface of the inner protective film 4 due to accumulation at the bent position is avoided. This improves the integrity of the attachment between the inner protective film 4 and the winding core 1, facilitating complete coverage of the inner protective film 4 on the winding core 1. In addition, compared with the existing art in which an opening is provided at the bent position, in some embodiments, the inner protective film 4 can not only completely cover the winding core 1, but also prevent lithium ions from flowing to a negative plate or the housing 2 through the opening, to react and form a lithium-aluminum alloy and result in corrosion of the housing 2. In this way, the spread of the danger of the power battery in a case of a short circuit is avoided and the safety of the power battery is improved.

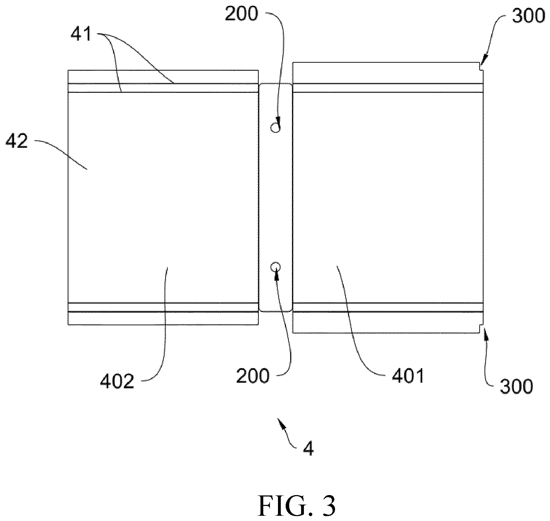

In order to ensure that the inner protective film 4 completely covers the winding core 1, the inner protective film 4 is defined by bending a complete protective film to define a shape that matches a contour of the winding core 1. Optionally, as shown in FIG. 2 and FIG. 3, the inner protective film 4 includes a first portion 401 and a second portion 402. The first portion 401 includes a first body portion 410 that is attached to a first face of the winding core 1, and two first side portions 411 that are respectively attached to parts of two side faces of the winding core 1. The second portion 402 includes a second body portion 412 that is attached to a second face of the winding core 1, and two second side portions 422 that are respectively attached to remaining parts of the two side faces of the winding core 1. The two first side portions 411 of the first portion 401 are respectively connected to the two second side portions 422 of the second portion 402. Each first side portion 411 of the first portion 401 partially overlaps with a corresponding second side portion 422 of the second portion 402, to define two strip-shaped overlapping regions 403. With the above-mentioned structure, attachment and assembly of the inner protective film 4 are convenient. It is only necessary to bend the inner protective film 4 along the contour of the winding core 1, and connect and fix the overlapping regions 403 on two sides of the first portion 401 and two sides of the second portion 402 using the hot-melt adhesive. The structure is simple, the manufacturing and operation are convenient, and production efficiency is improved.

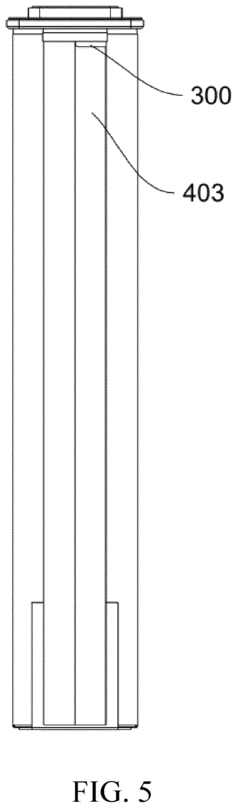

Optionally, as shown in FIG. 5 to FIG. 7, a notch 300 is provided at a connected part between each of the two first side portions 411 of the first portion 401 or each of the two second side portions 422 of the second portion 402 and a lower plastic structure 51, to cause a connected position between the inner protective film 4 and the lower plastic structure 51 after assembly to be a single layer. By providing the notch 300 on the first portion 401 or the second portion 402, when the inner protective film 4 is bent, an overlapping part between the second portion 402 and the first portion 401 or an overlapping part between the first portion 401 and the second portion 402 is in a single layer because the notch 300 is provided. That is, only the first portion 401 or the second portion 402 exists, so that the connected position between the lower plastic structure 51 and the opening edge of the upper end of the inner protective film 4 is in a single layer. This is beneficial for hot-melting of the bent inner protective film 4 with the lower plastic structure 51, thereby improving the hot-melt effect, and avoiding detachment of the overlapping region 403 which cause difficulties in subsequent placement of the winding core 1 into the housing. Therefore, the production efficiency of the power battery is improved, and the production yield of the power battery is improved. Optionally, an expanded area of the first portion 401 is larger than an expanded area of the second portion 402, and the notch 300 is provided in the first portion 401. Alternatively, an expanded area of the second portion 402 is larger than an expanded area of the first portion 401, and the notch 300 is provided in the second portion 402. That is, the notch 300 is provided in the portion with a larger expanded area, to ensure a single-layer structure at the connected position between the lower plastic structure 51 and the inner protective film 4, thereby effectively ensuring the quality and efficiency of hot-melting.

The assembly process of the power battery according to some embodiments is as follows.

After wound and formed, the winding core 1 is fixed by binding glue 7, to prevent the winding core 1 from unraveling; The bottom of the inner protective film 4 is fixed on the bottom support piece 3 through the hot-melt adhesive. Then the inner protective film 4 is bent along the bent section 41, and is connected through the hot-melt adhesive at the overlapping region 403 of the first portion 401 and the second portion 402. In addition, the first portion 401 or the second portion 402 is not beyond the notch 300, so that the inner protective film 4 defines a housing shape with a cavity inside. Then the adhesive tape 6 is connected to the two ends of the bottom support piece 3; The bound winding core 1 is placed into the inner protective film 4, and a positive pole and a negative pole of the winding core 1 are respectively connected to a positive post and a negative post on the top cover assembly 5 through a positive connecting piece and a negative connecting piece. The opening edge of the upper end of the inner protective film 4 is connected to the lower plastic structure 51 of the top cover assembly 5; The winding core 1 covered with the inner protective film 4 is placed into the housing 2. A top insulation sheet 9 and a bottom insulation sheet 10 are respectively disposed at the top and bottom of the housing 2. Finally, an outer protective film 8 is sleeved outside the housing, to complete the assembly of the power battery.

## Claims

1. A power battery, comprising:
a winding core (1);
a housing (2), wherein the winding core (1) is disposed in the housing (2), a bottom of the housing (2) is provided with a bottom support piece (3), and the bottom support piece (3) is provided with a first positioning hole (100); and
an inner protective film (4) sleeved outside the winding core (1) and located in the housing (2), wherein a bottom of the inner protective film (4) is connected to the bottom support piece (3), the bottom of the inner protective film (4) is provided with a second positioning hole (200), and the second positioning hole (200) and the first positioning hole (100) are provided in a staggered manner.

2. The power battery of claim 1, wherein a plurality of first positioning holes (100) and a plurality of second positioning holes (200) are provided, and the plurality of first positioning holes (100) and the plurality of second positioning holes (200) are all provided in a staggered manner.

3. The power battery of claim 1, wherein the inner protective film 4 comprises a plurality of bent sections (41) and a plurality of straight sections (42), and two adjacent straight sections (42) are connected by one of the plurality of bent sections (41).

4. The power battery of claim 3, wherein a thickness of one of the plurality of bent sections (41) is less than a thickness of one of the plurality of straight sections (42).

5. The power battery of claim 1, wherein the inner protective film (4) comprises a first portion (401) and a second portion (402), the first portion (401) comprises a first body portion (410) that is attached to a first face of the winding core (1) and two first side portions (411) that are respectively attached to parts of two side faces of the winding core (1), the second portion (402) comprises a second body portion (412) that is attached to a second face of the winding core (1) and two second side portions (422) that are respectively attached to remaining parts of the two side faces of the winding core (1), the two first side portions (411) of the first portion (401) are respectively connected to the two second side portions (422) of the second portion (402), and each first side portion (411) of the first portion (401) partially overlaps with a corresponding second side portion (422) of the second portion (402), to define two strip-shaped overlapping regions (403).

6. The power battery of claim 5, wherein a notch (300) is provided at a connected part between each of the two first side portions (411) of the first portion (401) or each of the two second side portions (422) of the second portion (402) and a lower plastic structure (51), to cause a connected position between the inner protective film (4) and the lower plastic structure (51) to be a single-layer structure.

7. The power battery of claim 6, wherein an expanded area of the first portion (401) is larger than an expanded area of the second portion (402), and the notch (300) is provided in the first portion (401); or an expanded area of the second portion (402) is larger than an expanded area of the first portion (401), and the notch (300) is provided in the second portion (402).

8. The power battery of claim 1, further comprising a top cover assembly (5), wherein a lower plastic structure (51) is disposed on the top cover assembly (5), an upper end of the inner protective film (4) is in a shape of an opening, and an opening edge of the upper end of the inner protective film (4) is connected to the lower plastic structure (51) through hot melting.

9. The power battery of claim 2, further comprising a top cover assembly (5), wherein a lower plastic structure (51) is disposed on the top cover assembly (5), an upper end of the inner protective film (4) is in a shape of an opening, and an opening edge of the upper end of the inner protective film (4) is connected to the lower plastic structure (51) through hot melting.

10. The power battery of claim 3, further comprising a top cover assembly (5), wherein a lower plastic structure (51) is disposed on the top cover assembly (5), an upper end of the inner protective film (4) is in a shape of an opening, and an opening edge of the upper end of the inner protective film (4) is connected to the lower plastic structure (51) through hot melting.

11. The power battery of claim 4, further comprising a top cover assembly (5), wherein a lower plastic structure (51) is disposed on the top cover assembly (5), an upper end of the inner protective film (4) is in a shape of an opening, and an opening edge of the upper end of the inner protective film (4) is connected to the lower plastic structure (51) through hot melting.

12. The power battery of claim 5, further comprising a top cover assembly (5), wherein a lower plastic structure (51) is disposed on the top cover assembly (5), an upper end of the inner protective film (4) is in a shape of an opening, and an opening edge of the upper end of the inner protective film (4) is connected to the lower plastic structure (51) through hot melting.

13. The power battery of claim 1, wherein the bottom of the inner protective film (4) is connected to the bottom support piece (3) through hot melting.

14. The power battery of claim 2, wherein the bottom of the inner protective film (4) is connected to the bottom support piece (3) through hot melting.

15. The power battery of claim 3, wherein the bottom of the inner protective film (4) is connected to the bottom support piece (3) through hot melting.

16. The power battery of claim 4, wherein the bottom of the inner protective film (4) is connected to the bottom support piece (3) through hot melting.

17. The power battery of claim 5, wherein the bottom of the inner protective film (4) is connected to the bottom support piece (3) through hot melting.

18. The power battery of claim 6 or 7, wherein the bottom of the inner protective film (4) is connected to the bottom support piece (3) through hot melting.

19. The power battery of any one of claims 1 to 7, further comprising an adhesive tape (6), wherein the adhesive tape (6) is connected to a lower end face of the bottom support piece (3) and an outer side face of the inner protective film (4).

20. The power battery of claim 19, wherein two adhesive tapes (6) are disposed, and the two adhesive tapes (6) are respectively disposed at two ends of the bottom support piece (3) and bonded to two opposite side walls of the inner protective film (4) respectively.
